# EUROPÄISCHE PATENTSCHRIFT

(11) **EP 2 327 584 B1**
(45) Veröffentlichungstag und Bekanntmachung des Hinweises auf die Patenterteilung: **08.07.2015**
(21) Anmeldenummer: 09177003.2
(22) Anmeldetag: 25.11.2009
(51) Int. Cl.: B60Q 1/076

(54) **Einstellsystem für zumindest ein Lichtmodul einer Beleuchtungseinrichtung eines Fahrzeugs sowie Beleuchtungseinrichtung für ein Fahrzeug**
Adjustment system for at least one light module of a lighting device of a vehicle and lighting device for a vehicle
Système de réglage pour au moins un module d'éclairage d'un dispositif d'éclairage d'un véhicule ainsi que dispositif d'éclairage pour un véhicule

(43) Veröffentlichungstag der Anmeldung: 01.06.2011
(73) Patentinhaber: Hella KGaA Hueck & Co., 59552 Lippstadt (DE)
(72) Erfinder: Schulte, Jürgen, 33142, Büren-Brenken (DE); Spork, Heinz-Uwe, 59555, Lippstadt (DE); Hammelbeck, Hans-Gerd, 59556, Lippstadt (DE); Hunecke, Katrin, 59558, Lippstadt (DE)

(56) Entgegenhaltungen:
- EP-A1- 0 791 780
- EP-A2- 1 398 210
- DE-A1- 19 802 023
- DE-A1-102006 018 963
- FR-A1- 2 840 863
- US-A1- 2003 169 587

## Beschreibung

Die Erfindung betrifft ein Einstellsystem für zumindest ein Lichtmodul einer Beleuchtungseinrichtung eines Fahrzeuges, aufweisend einen in einem Gehäuse der Beleuchtungseinrichtung angeordneten Halterahmen, an dem das zumindest eine Lichtmodul angeordnet ist, wobei der Halterahmen über eine Drehachse des Einstellsystems innerhalb des Gehäuses der Beleuchtungseinrichtung drehbar gelagert ist, aufweisend eine Einstelleinrichtung zum Kippen des Halterahmens um die Drehachse des Einstellsystems, wobei die Einstelleinrichtung und der Halterahmen schwenkbeweglich miteinander verbunden sind. Ferner betrifft die Erfindung eine Beleuchtungseinrichtung für ein Fahrzeug, mit einem Gehäuse, mit zumindest einem Lichtmodul innerhalb des Gehäuses und mit einem Einstellsystem für das zumindest eine Lichtmodul.

Einstellsysteme für Beleuchtungseinrichtungen, wie Scheinwerfer, sind hinreichend bekannt und können manuell oder elektromotorisch ausgeführt sein. Mittels des Einstellsystems kann beispielsweise die Lage des emittierten Lichtes, beispielsweise des emittierten Abblendlichtes eines Kraftfahrzeugs, relativ zur Horizontalen eingestellt werden.

Beleuchtungseinrichtungen, wie beispielsweise Scheinwerfer für Kraftfahrzeuge, weisen in der Regel ein Gehäuse auf, in dem wenigstens ein Lichtmodul verstellbar angeordnet ist. Das wenigstens eine Lichtmodul ist vorzugsweise an einem Tragrahmen angeordnet, der bewegbar innerhalb des Gehäuses angeordnet ist. Dabei kann vorgesehen sein, dass der Tragrahmen drehbeweglich bzw. schwenkbeweglich gelagert ist.

So ist beispielsweise aus der DE 10 2004 058 200 A1 ein Fahrzeugscheinwerfer bekannt, der mehrere an einem Tragrahmen angeordnete Lichtmodule aufweist. Zur Verstellung der optischen Achsen der Lichtmodule ist ein Ausrichtungsmechanismus vorgesehen. Das bedeutet, über den Ausrichtungsmechanismus können die optischen Achsen aller Lichtmodule, wobei die optischen Achsen der Lichtmodule parallel zueinander verlaufen, gleichzeitig gekippt werden. Die Einstellachsen des Ausrichtungsmechanismus verlaufen in der Normalstellung des Fahrzeugscheinwerfers parallel zu den optischen Achsen der Lichtmodule. Durch eine derartige Anordnung der Einstellachsen des Ausrichtungsmechanismus zu den optischen Achsen der Lichtmodule ist relativ viel Bauraum innerhalb Fahrzeugscheinwerfergehäuses erforderlich. Hierdurch ist eine kompakte Bauweise einer Beleuchtungseinrichtung, wie eines Fahrzeugscheinwerfers, nicht möglich. Nach dem Verstellen des Lichtmoduls über die senkrecht zum Halterahmen angeordnete Einstellachse, ist ein mehrmaliges Nachjustieren in horizontaler und vertikaler Achse notwendig, um den Lichtschwerpunkt optimal anzuordnen. Weitere Beleuchtungseinrichtungen mit Einstellsysteme sind aus den Druckschriften DE 198 02 023 A1 und FR 2 840 863 A1 bekannt.

Ausgehend von dem zuvor beschriebenen Stand der Technik, ist es die Aufgabe der Erfindung, ein Einstellsystem für zumindest ein Lichtmodul einer Beleuchtungseinrichtung eines Fahrzeuges sowie eine Beleuchtungseinrichtung für ein Fahrzeug zu schaffen, die sehr kompakt ausgebildet ist. Insbesondere soll das Einstellsystem innerhalb der Beleuchtungseinrichtung möglichst wenig Bauraum benötigen, so dass auch die Beleuchtungseinrichtung relativ klein ausgebildet werden kann.

Diese Aufgabe wird erfindungsgemäß durch eine Beleuchtungseinrichtung eines Fahrzeuges mit den Merkmalen gemäß dem unabhängigen Patentanspruch 1 gelöst. Weitere Merkmale und Details der Erfindung ergeben sich aus den Unteransprüchen, der Beschreibung sowie den Zeichnungen. Merkmale und Details die im Zusammenhang mit dem Einstellsystem beschrieben sind, gelten selbstverständlich auch im Zusammenhang mit der Beleuchtungseinrichtung, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Einstellsystem für zumindest ein Lichtmodul einer Beleuchtungseinrichtung eines Fahrzeuges, aufweisend einen in einem Gehäuse der Beleuchtungseinrichtung angeordneten Halterahmen, an dem das zumindest eine Lichtmodul angeordnet ist, wobei der Halterahmen über eine Drehachse des Einstellsystems innerhalb des Gehäuses der Beleuchtungseinrichtung drehbar gelagert ist, aufweisend eine Einstelleinrichtung zum Kippen des Halterahmens um die Drehachse des Einstellsystems, wobei die Einstelleinrichtung und der Halterahmen schwenkbeweglich miteinander verbunden sind, gelöst. Dabei ist das Einstellsystem dadurch gekennzeichnet, dass die Einstellachse der Einstelleinrichtung windschief zu der Längsachse der Drehachse verläuft und das zumindest eine Lichtmodul derart an dem Halterahmen angeordnet ist, dass die optische Achse des zumindest einen Lichtmoduls oder eine parallele Projektion der optischen Achse des zumindest einen Lichtmoduls, die die Längsachse der Drehachse schneidet, in einem Winkel zwischen 10° und 89° geneigt zu der Längsachse der Drehachse verläuft.

Durch eine derartige Anordnung der Einstellachse der Einstelleinrichtung zu der Längsachse de Drehachse des Einstellsystems sowie der Anordnung der optischen Achse des zumindest einen Lichtmoduls zu der Längsachse der Drehachse des Einstellsystems wird eine kompakte Bauweise des Einstellsystems ermöglicht. Dadurch, dass die Drehachse des Einstellsystems, über die der Halterahmen innerhalb der Beleuchtungseinrichtung drehbar gelagert ist, geneigt zu der optischen Achse des wenigstens einen Lichtmoduls verläuft, wird Bauraum innerhalb der Beleuchtungseinrichtung geschaffen, in der die Einstelleinrichtung des Einstellsystems platzsparend angeordnet werden kann. Gleichzeitig bleibt gewährleistet, dass das zumindest eine Lichtmodul beziehungsweise die optische Achse des zumindest einen Lichtmoduls durch eine Veränderung der Lage des Halterahmens verstellt werden kann. Nach dem Verstellen des Lichtmoduls über die Einstellachse der Einstelleinrichtung ist ein mehrmaliges Nachjustieren in horizontaler und vertikaler Achse nicht notwendig, um den Lichtschwerpunkt optimal anzuordnen.

Die Einstellachse der Einstelleinrichtung ist bei einem derartigen Einstellsystem nicht, wie üblich in Richtung und parallel zur optischen Achse des zumindest einen Lichtmoduls angeordnet, sondern entsprechend der Neigung der Drehachse des Einstellsystems beziehungsweise der Neigung des Halterahmens versetzt zur optischen Achse angeordnet. Durch ein Kippen des Halterahmens durch eine Veränderung der Einstelleinrichtung kann die optische Achse des zumindest einen Lichtmoduls, insbesondere vertikal, verändert werden. Je nach Größe der Beleuchtungseinrichtung und des in der Beleuchtungseinrichtung angeordneten Halterahmens, kann das zumindest eine Lichtmodul und die Längsachse der Drehachse des Einstellsystems beziehungsweise des Halterahmens in einem Winkel zwischen 10° und 89° zueinander angeordnet sein. Entscheidend für die Gradzahl des Winkels ist der vorhandene Bauraum innerhalb der Beleuchtungseinrichtung sowie inwieweit die optische Achse des wenigstens einen Lichtmoduls gekippt werden soll.

Die optische Achse des wenigstens einen Lichtmoduls, die auch als Lichtachse bezeichnet wird, verläuft in Normalstellung des Lichtmoduls parallel zur Fahrzeugrichtung, das heißt zur Längsachse des Fahrzeuges. Dadurch, dass die Drehachse des Einstellsystems nicht senkrecht zu der Fahrzeugrichtung des Fahrzeuges angeordnet ist, können die räumlichen Ausmaße des Einstellsystems, insbesondere durch eine entsprechend windschiefe Anordnung der Einstellachse der Einstelleinrichtung zu der Drehachse beziehungsweise der Längsachse der Drehachse, gering gehalten werden.

An dem Halterahmen des Einstellsystems können auch zwei oder mehr Lichtmodule angeordnet sein, wobei alle Lichtmodule beziehungsweise die optischen Achsen aller Lichtmodule über das Einstellsystem variiert werden können.

Gemäß einer besonders bevorzugten Weiterentwicklung der Erfindung kann bei dem Einstellsystem vorgesehen sein, dass die Einstelleinrichtung derart an dem Halterahmen angelenkt ist, dass die Einstellachse der Einstelleinrichtung in einer parallelen Projektion, in der sie die Längsachse der Drehachse schneidet, senkrecht zur Längsachse der Drehachse verläuft. Hierdurch ist die Einstellachse normal zur Drehachse ausgerichtet. Das heißt, die Einstellachse ist in einem Winkel von 90° zur Längsachse der Drehachse angeordnet, wobei die Einstellachse die Längsachse der Drehachse nicht schneidet. Durch eine derartige Anordnung der Einstelleinrichtung beziehungsweise der Einstellachse der Einstelleinrichtung, die insbesondere eine Gewindespindel aufweist, ist gewährleistet, dass der Halterahmen, an dem die Einstelleinrichtung schwenkbeweglich angeordnet ist, gleichmäßig gekippt werden kann. Dabei verläuft die Einstellachse der Einstelleinrichtung nicht senkrecht zu dem Halterahmen, sondern geneigt zu diesem. Eine derartige Ausbildung der Einstelleinrichtung ermöglicht, dass das Einstellsystem kompakt, wenig Bauraum benötigend, ausgebildet werden kann. Ein derartiges Einstellsystem kann daher auch in Beleuchtungseinrichtungen, insbesondere in Scheinwerfern von Kraftfahrzeugen, eingebaut werden, die relativ klein ausgebildet sind.

Durch die spezielle Anordnung der Bauteile des Einstellsystems zueinander, das heißt der Drehachse und der Einstellachse der Einstelleinrichtung zueinander sowie der Drehachse und der Einstellachse zu der optischen Achse des wenigstens einen Lichtmoduls, kann insbesondere eine vertikale Veränderung des zumindest einen Lichtmoduls erfolgen, ohne dass das zumindest eine Lichtmodul horizontal verstellt wird.

Gemäß einer weiteren bevorzugten Weiterentwicklung der Erfindung kann bei dem Einstellsystem vorgesehen sein, dass die optische Achse des zumindest einen Lichtmoduls oder eine parallele Projektion der optischen Achse des zumindest einen Lichtmoduls, die die Einstellachse der Einstelleinrichtung schneidet, in einem Winkel β zwischen 1 ° und 80°, insbesondere zwischen 5° und 50°, geneigt zu der Einstellachse der Einstelleinrichtung verläuft. Als besonders vorteilhaft hat sich herausgestellt, wenn dieser Winkel einen Wert zwischen 10° und 45°, insbesondere einen Wert zwischen 20 und 40°, aufweist. Bei einem Winkel zwischen 5° und 50°, insbesondere einem Winkel zwischen 20° und 40°, zwischen der optischen Achse des zumindest einen Lichtmoduls oder der parallelen Projektion der optischen Achse des zumindest einen Lichtmoduls auf die Einstellachse der Einstelleinrichtung und der Einstellachse der Einstelleinrichtung, ist gewährleistet, dass die Einstelleinrichtung und damit das Einstellsystem möglichst platzsparend ausgebildet sind. Hierdurch kann wiederum die Beleuchtungseinrichtung, in der das Einstellsystem für das zumindest eine Lichtmodul angeordnet ist, geringe Ausmaße aufweisen. Insbesondere bei einem Winkel β zwischen 20° und 40° kann durch eine Veränderung der Einstelleinrichtung das zumindest eine Lichtmodul vertikal verändert werden, ohne dass eine spürbare horizontale Veränderung des zumindest einen Lichtmoduls erfolgt.

Über die Einstelleinrichtung und damit die Veränderung der Einstellachse kann der Halterahmen nach vorne oder nach hinten gekippt werden. Dabei wird der Halterahmen um die Längsachse der Drehachse gekippt.

Bevorzugt ist ferner ein Einstellsystem, bei dem der Winkel α einen Wert zwischen 45° und 80°, insbesondere zwischen 50° und 70°, und ganz besonders von 60°, aufweist. Dieser Winkel α stellt die Neigung der optischen Achse des zumindest einen Lichtmoduls beziehungsweise der Projektion der optischen Achse des zumindest einen Lichtmoduls auf die Längsachse der Drehachse zu der Längsachse der Drehachse dar. Das heißt, im Vergleich zum Stand der Technik, bei dem die Drehachse des Halterahmens senkrecht zu der Fahrzeugrichtung angeordnet ist, ist die Drehachse bei dem Einstellsystem vorzugsweise zwischen 20° und 40°, insbesondere um 30°, zur Fahrzeugrichtung gedreht. Die Lage der Drehachse beziehungsweise die der Längsachse der Drehachse des Einstellsystems verändert sich beim Kippen des Halterahmens nicht zu der optischen Achse des zumindest einen Lichtmoduls. So hat sich ausgestellt, dass bei einem Winkel zwischen 20 und 40°, insbesondere bei 30°, zwischen der optischen Achse des zumindest einen Lichtmoduls beziehungsweise der parallelen Projektion der optischen Achse des zumindest einen Lichtmoduls auf die Drehachse und der Drehachse, das zumindest eine Lichtmodul bei einer Veränderung der Lage des Halterahmens über die Einstelleinrichtung nicht zur Seite wegkippt. Dies ist insbesondere dann nicht der Fall, wenn die Einstelleinrichtung derart an dem Halterahmen angelenkt ist, dass die Einstellachse der Einstelleinrichtung in einer parallelen Projektion auf die Längsachse der Drehachse senkrecht zur Längsachse der Drehachse verläuft.

Die Einstelleinrichtung zum Kippen des Halterahmens kann verschiedenartig ausgebildet sein. Insbesondere kann diese manuell oder elektromotorisch angetrieben sein. Gemäß einer besonders bevorzugten Weiterentwicklung der Erfindung kann bei dem Einstellsystem vorgesehen sein, dass die Einstelleinrichtung eine Gewindespindel aufweist, die eine Drehbewegung, ausgelöst durch eine Antriebseinheit, in eine translatorische Bewegung umwandelt. Die Neigung der Einstellachse zu dem Halterahmen ändert sich aufgrund einer Bewegung der Gewindespindel. Die Anlenkung der Einstelleinrichtung, das heißt der Gewindespindel, an den Tragrahmen erfolgt vorzugsweise durch eine Kugelgelenk-Verbindung.

Ferner ist ein Einstellsystem für zumindest ein Lichtmodul einer Beleuchtungseinrichtung eines Fahrzeuges bevorzugt, bei dem die Drehachse an einer ersten Seite des Halterrahmens angeordnet ist und die Einstelleinrichtung an einer zur ersten Seite gegenüberliegenden zweiten Seite des Halterahmens schwenkbeweglich angelenkt ist. Eine derartige Anordnung der Drehachse und der Einstelleinrichtung des Einstellsystems zueinander gewährleistet, dass der Halterahmen über die Einstelleinrichtung sicher um die Drehachse gekippt werden kann.

Gemäß dem zweiten Aspekt der Erfindung wird die Aufgabe durch eine Beleuchtungseinrichtung für ein Fahrzeug, mit einem Gehäuse, mit zumindest einem Lichtmodul innerhalb des Gehäuses und mit einem Einstellsystem für das zumindest eine Lichtmodul, bei dem das Einstellsystem gemäß dem ersten Aspekt der Erfindung ausgebildet ist, gelöst.

Eine Beleuchtungseinrichtung für ein Fahrzeug, insbesondere für ein Kraftfahrzeug, bei der das Einstellsystem für das zumindest eine Lichtmodul einen in einem Gehäuse der Beleuchtungseinrichtung angeordneten Halterahmen aufweist, an dem das zumindest eine Lichtmodul angeordnet ist, wobei der Halterahmen über eine Drehachse des Einstellsystems innerhalb des Gehäuses der Beleuchtungseinrichtung drehbar gelagert ist, und ferner eine Einstelleinrichtung zum Kippen des Halterahmens um die Drehachse des Einstellsystems aufweist, wobei die Einstelleinrichtung und der Halterahmen schwenkbeweglich miteinander verbunden sind, und bei der die Einstellachse der Einstelleinrichtung des Einstellsystems windschief zu der Längsachse der Drehachse verläuft und das zumindest eine Lichtmodul derart an dem Halterahmen angeordnet ist, dass die optische Achse des zumindest einen Lichtmoduls oder eine parallele Projektion der optischen Achse des zumindest einen Lichtmoduls, die die Längsachse der Drehachse schneidet, in einem Winkel (α) zwischen 10° und 89° geneigt zu der Längsachse der Drehachse (4) verläuft, kann besonders platzsparend ausgebildet werden, wobei gleichzeitig eine gute Einstellung beziehungsweise Kalibrierung des zumindest einen Lichtmoduls erfolgen kann.

Die Beleuchtungseinrichtung ist vorzugsweise derart in dem Fahrzeug angeordnet, dass die optische Achse, das heißt die Lichtachse, des zumindest einen Lichtmoduls senkrecht zu der Fahrzeugrichtung, das heißt zu der Längsachse des Fahrzeuges, ausgerichtet ist. Die Drehachse des Einstellsystems beziehungsweise der Halterahmen des Einstellsystems ist vorzugsweise um 20° bis 40°, insbesondere um 30°, geneigt zu der Fahrzeugrichtung innerhalb der Beleuchtungseinrichtung beweglich, insbesondere drehbar, angeordnet. Durch diese spezielle Anordnung des Einstellsystems zu dem zumindest einen Lichtmodul beziehungsweise zu der optischen Achse des zumindest einen Lichtmoduls kann die Beleuchtungseinrichtung geringe äußere Ausmaße aufweisen.

Das Lichtmodul kann verschiedenartige Lichtquellen aufweisen. Beispielsweise kann das Lichtmodul einen oder mehrere Halogenstrahler aufweisen. Gemäß einer weiteren bevorzugten Weiterentwicklung kann bei der Beleuchtungseinrichtung vorgesehen sein, dass das zumindest eine Lichtmodul wenigstens eine Leuchtdiode (LED) aufweist. Vorzugsweise weist ein Lichtmodul eine Vielzahl von Leuchtdioden auf. Die einzelnen Lichtmodule beziehungsweise die Leuchtdioden eines Lichtmoduls können zusätzlich einzeln vorstellbar sein. So können beispielsweise die einzelnen Leuchtdioden zueinander einstellbar beziehungsweise kalibrierbar sein, um die einzelnen LED-Lichtfunktionen bzw. die einzelnen Leuchtdioden in sich überschneiden Bereichen in Deckung zu bringen.

Bevorzugt ist die Beleuchtungseinrichtung ein Scheinwerfer eines Fahrzeuges, insbesondere ein Frontscheinwerfer eines Fahrzeuges. Es ist aber auch denkbar, dass die Beleuchtungseinrichtung den Heckscheinwerfer eines Fahrzeuges darstellt. Das Fahrzeug kann insbesondere ein Personenkraftfahrzeug sein.

Ferner ist bevorzugt, dass die horizontale Einstellung des Einstellsystems, insbesondere die horizontale Verstellung des zumindest einen Lichtmoduls, unabhängig von der vertikalen Einstellung des zumindest eines Lichtmoduls erfolgen kann. Für die horizontale Einstellung des zumindest einen Lichtmoduls können gesonderte Einstellelemente an dem Einstellsystem vorgesehen sein.

Anhand der beigefügten Zeichnungen wird die Erfindung nachfolgend näher erläutert. Dabei zeigt:
- Fig. 1: eine schematische, perspektivische Darstellung eines Einstellsystems mit einem in dem Halterahmen des Einstellsystems angeordneten Lichtmodul,
- Fig. 2: eine schematische Seitenansicht auf das Einstellsystem gemäß Fig. 1,
- Fig. 3: eine schematische Frontansicht auf das Einstellsystem gemäß Fig. 1,
- Fig. 4: eine vergrößerte Darstellung eines Teilbereiches des Einstellsystems gemäß Fig. 3.

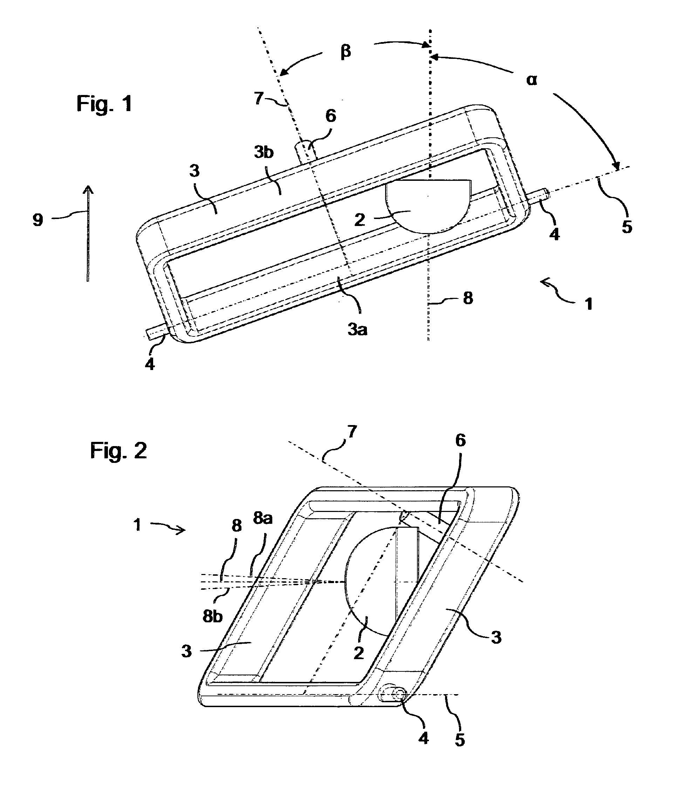

Elemente mit gleicher Funktion und Wirkungsweise sind in den Figuren 1 mit 4 jeweils mit denselben Bezugszeichen versehen.

In der Fig. 1 ist in einer perspektivischen Ansicht eine schematische Darstellung eines Einstellsystems 1 mit einem in dem Halterahmen 3 des Einstellsystems 1 angeordneten Lichtmodul 2 gezeigt. Das Lichtmodul 2, welches vorzugsweise wenigstens eine Leuchtdiode aufweist, ist an dem Halterahmen 3 befestigt. Das Einstellsystem 1 weist eine Drehachse 4 auf, an der der Halterahmen 4 angeordnet ist. Die Drehachse 4 ist drehbar innerhalb einer Beleuchtungseinrichtung, insbesondere dem Gehäuse eines Scheinwerfers, gelagert. Das bedeutet, der Halterahmen 3 ist drehbar um die Längsachse 5 der Drehachse 4 gelagert. Um den Halterahmen 3 zu drehen beziehungsweise zu kippen, weist das Einstellsystem 1 eine Einstelleinrichtung 6 auf. Die Drehachse 4 ist vorzugsweise an einer ersten Seite 3a des Halterahmens 3 angeordnet, während die Einstelleinrichtung 6 vorzugsweise an einer der ersten Seite 3a gegenüberliegenden zweiten Seite 3b des Halterahmens 3 schwenkbeweglich angelenkt ist. Die Einstellachse 7 der Einstelleinrichtung 6 verläuft windschief zu der Längsachse 5 der Drehachse 4. Das Lichtmodul 2 ist derart an dem Halterahmen 3 angeordnet, dass die optische Achse 8 des Lichtmoduls 2 beziehungsweise eine parallele Projektion der optischen Achse 8 des Lichtmoduls 2 auf die Drehachse 4 in einem Winkel α geneigt zu der Längsachse 5 der Drehachse 4 verläuft. Der Winkel α beträgt vorzugsweise zwischen 10° und 89°, insbesondere zwischen 50° und 70°. Durch eine derartige geneigte Anordnung der Drehachse 4 zu der optischen Achse 8 des Lichtmoduls 2 beziehungsweise der parallelen Projektion der optischen Achse 8 des Lichtmoduls 2 auf die Drehachse 4 und der entsprechenden Anordnung der Einstelleinrichtung 6 beziehungsweise der Einstellachse 7 der Einstelleinrichtung 6 in einem Winkel β von 1 ° bis 80°, vorzugsweise von 20° bis 40°, zu der optischen Achse 8 des Lichtmoduls 2 beziehungsweise der parallelen Projektion der optischen Achse 8 des Lichtmoduls 2 auf die Einstellachse 7 der Einstelleinrichtung 6, kann das Einstellsystem 1 platzsparend innerhalb einer Beleuchtungseinrichtung, insbesondere innerhalb eines Scheinwerfers, eines Fahrzeuges, wie eines Personenkraftfahrzeuges, angeordnet werden. In dieser bevorzugten Ausführungsformvariante des Einstellsystems 1 ist die Einstelleinrichtung 6 derart an dem Halterahmen 3 angelenkt, dass die Einstellachse 7 der Einstelleinrichtung 6 in einer parallelen Projektion, in der sie die Längsachse 5 der Drehachse 4 schneidet, senkrecht zur Längsachse 5 der Drehachse 4 verläuft. Dies ermöglicht ein besonders einfaches und sicheres Kippen des Halterahmens 3 durch die Einstelleinrichtung 6. Hierbei wird der Halterahmen 3 um die Drehachse 4 des Einstellsystems 1 gedreht.

In der Fig. 2 ist schematisch eine Seitenansicht auf ein Einstellsystem 1 gezeigt. In dieser Fig. 2 ist dargestellt, wie sich die optische Achse 8 des Lichtmoduls 2 bei einer Kippung des Halterahmens 3 ändert. Die mit Bezugszeichen 8 gekennzeichnete optische Achse stellt in Fig. 2 die Normalstellung des Lichtmoduls 2 dar. Wird der Halterahmen 3 durch die Einstelleinrichtung 6 aufgerichtet, so verändert sich die optische Achse des Lichtmoduls 2, was durch Bezugszeichen 8b dargestellt ist. Wird der Halterahmen 3 durch die Einstelleinrichtung 6 nach unten geneigt, so neigt sich auch die optische Achse des Lichtmoduls 2 nach unten, was durch Bezugszeichen 8a dargestellt ist. Die Einstellachse 7 der Einstelleinrichtung 6 ist windschief zu der Längsachse 5 der Drehachse 4 des Einstellsystems 1 angeordnet. In Fig. 2 ist nochmals deutlich erkennbar, dass bei einer parallelen Projektion der Einstellachse 7 auf die Drehachse 4, die Einstellachse 7 senkrecht zu der Längsachse 5 der Drehachse 4 verläuft. Da die Drehachse 4 des Einstellsystems 1 schräg zu der parallelen Projektion der optischen Achse 8 auf die Drehachse 4 verläuft, ist auch die Einstellachse 7 entsprechend der Neigung der Drehachse 4 beziehungsweise des Halterahmens 3 versetzt zu optischen Achse angeordnet. Hierdurch kann das Einstellsystem 1 platzsparend innerhalb einer Beleuchtungseinrichtung, wie eines Scheinwerfers, angeordnet werden.

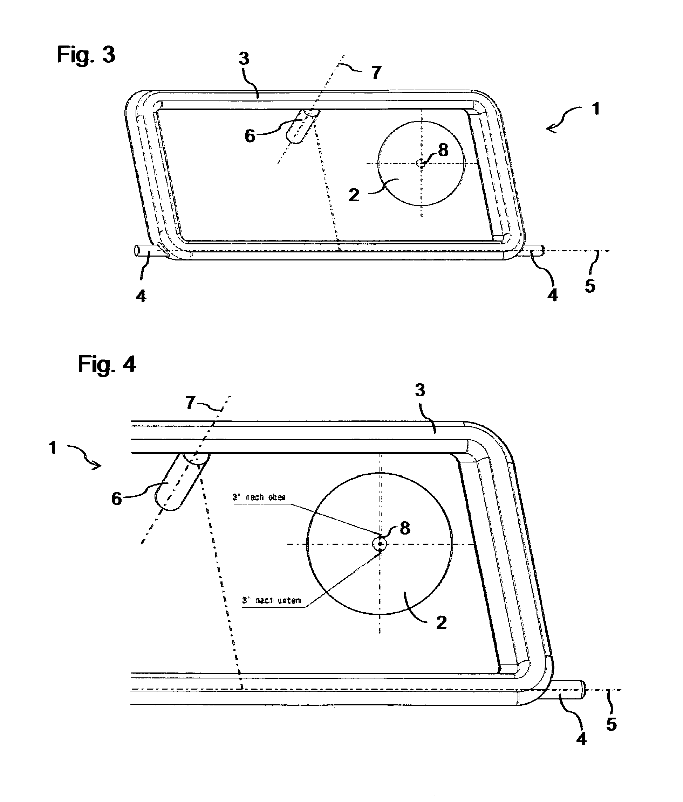

In den Fig. 3 und 4 ist das Einstellsystem 1 gemäß der Fig. 1 schematisch in einer Frontansicht gezeigt, wobei Fig. 4 eine vergrößerte Darstellung der Fig. 3 ist. Die optische Achse 8 das Lichtmoduls 2 verläuft senkrecht zu der Blattebene, auf der die Fig. 3 und 4 dargestellt sind. Die Einstellachse 7 der Einstelleinrichtung 6, verläuft nicht, wie aus dem Stand der Technik bekannt, parallel zu der optischen Achse 8 des Lichtmoduls 2, sondern windschief und geneigt zu dieser. In der Fig. 4 ist verdeutlicht, wie sich der Mittelpunkt des Lichtmoduls 2 vertikal um 3° nach oben oder um 3° nach unten verschiebt, wenn über die Einstelleinrichtung 6 die Neigung des Halterahmens 3 verändert wird. Trotz der schrägen, windschiefen Lage der Einstellachse 7 zu der optischen Achse 8 des Lichtmoduls 2 kann durch die Einstelleinrichtung 7 hauptsächlich eine vertikale Neigung der optischen Achse 8 des Lichtmoduls 2 erreicht werden. Insbesondere bei einem Winkel β von 20° bis 40° zwischen der Einstellachse 7 und der optischen Achse 8 beziehungsweise der parallelen Projektion der optischen Achse 8 auf die Einstellachse 7, kann durch das Einstellsystem 1 erreicht werden, dass die horizontale Verschiebung des Lichtmoduls 2 vernachlässigbar ist.

### Bezugszeichenliste

- 1: Einstellsystem
- 2: Lichtmodul
- 3: Tragrahmen
- 3a: erste Seite des Tragrahmens
- 3b: zweite Seite des Tragrahmens
- 4: Drehachse
- 5: Längsachse der Drehachse
- 6: Einstelleinrichtung
- 7: Einstellachse der Einstelleinrichtung
- 8: optische Achse / Lichtachse
- 9: Fahrzeugrichtung

## Patentansprüche

1. Beleuchtungseinrichtung für ein Fahrzeug mit zumindest einem Lichtmodul (2) und mit einem Einstellsystem (1) für das zumindest ein Lichtmodul (2), aufweisend einen in einem Gehäuse der Beleuchtungseinrichtung angeordneten Halterahmen (3), an dem das zumindest ein Lichtmodul (2) angeordnet ist, wobei der Halterahmen (3) über eine Drehachse (4) des Einstellsystems (1) innerhalb des Gehäuses der Beleuchtungseinrichtung drehbar gelagert ist, aufweisend eine Einstelleinrichtung (6) zum Kippen des Halterahmens (3) um die Drehachse (4) des Einstellsystems (1), wobei die Einstelleinrichtung (6) und der Halterahmen (3) schwenkbeweglich miteinander verbunden sind, wobei die Einstellachse (7) der Einstelleinrichtung (6) windschief zu der Längsachse (5) der Drehachse (4) verläuft und dass das zumindest eine Lichtmodul (2) derart an dem Halterahmen (3) angeordnet ist, dass die optische Achse (8) des zumindest einen Lichtmoduls (2) oder eine parallele Projektion der optischen Achse (8) des zumindest einen Lichtmoduls (2), die die Längsachse (5) der Drehachse (4) schneidet, in einem Winkel (α) zwischen 10° und 89° geneigt zu der Längsachse (5) der Drehachse (4) verläuft, **dadurch gekennzeichnet, dass** die Drehachse (4) an einer ersten Seite (3a) des Halterrahmens (3) angeordnet ist und die Einstelleinrichtung (6) an einer zur ersten Seite (3a) gegenüberliegenden zweiten Seite (3b) des Halterahmens (3) schwenkbeweglich angelenkt ist,
wobei die Drehachse (4) des Einstellsystems (6) nicht senkrecht zur Fahrzeugrichtung des Fahrzeugs so anordenbar ist, dass die optische Achse des Lichtmoduls in seiner Normalstellung parallel zur Fahrzeugrichtung verläuft.

2. Beleuchtungseinrichtung nach Anspruch 1, **dadurch gekennzeichnet, dass** die Einstelleinrichtung (6) derart an dem Halterahmen (3) angelenkt ist, dass die Einstellachse (7) der Einstelleinrichtung (6) in einer parallelen Projektion, in der sie die Längsachse (5) der Drehachse (4) schneidet, senkrecht zur Längsachse (5) der Drehachse (4) verläuft.

3. Beleuchtungseinrichtung nach wenigstens einem der vorhergehenden Ansprüche 1 oder 2, **dadurch gekennzeichnet, dass** die optische Achse (8) des zumindest einen Lichtmoduls (2) oder eine parallele Projektion der optischen Achse (8) des zumindest einen Lichtmoduls (2), die die Einstellachse (7) der Einstelleinrichtung (6) schneidet, in einem Winkel (β) zwischen 1 ° und 80°, insbesondere zwischen 5° und 50°, geneigt zu der Einstellachse (7) der Einstelleinrichtung (6) verläuft.

4. Beleuchtungseinrichtung nach wenigstens einem der vorhergehenden Ansprüche 1 bis 3, **dadurch gekennzeichnet, dass** der Winkel (α) einen Wert zwischen 45° und 80°, insbesondere zwischen 50° und 70°, und ganz besonders von 60°, aufweist und/oder dass der Winkel (β) einen Wert zwischen 10° und 45°, insbesondere zwischen 20° und 40° aufweist.

5. Beleuchtungseinrichtung nach wenigstens einem der vorhergehenden Ansprüche 1 bis 4, **dadurch gekennzeichnet, dass** die Einstelleinrichtung (6) eine Gewindespindel aufweist, die eine Drehbewegung in eine translatorische Bewegung umwandelt.

6. Beleuchtungseinrichtung nach Ansprüche 1 bis 5, **dadurch gekennzeichnet, dass** das zumindest eine Lichtmodul (2) wenigstens eine Leuchtdiode aufweist.

7. Beleuchtungseinrichtung nach wenigstens einem der vorhergehenden Ansprüche 1 bis 6 **dadurch gekennzeichnet, dass** die Beleuchtungseinrichtung ein Scheinwerfer, insbesondere ein Frontscheinwerfer, eines Fahrzeuges, insbesondere eines Personenkraftfahrzeuges, ist.

## Claims

1. Lighting device for a vehicle with one or more light modules (2) and with an adjusting system (1) for one or more light modules (2), comprising a holding frame (3) arranged in a housing of the lighting device having one or more light modules (2), the holding frame (3) being rotatably supported inside the housing of the lighting device via an axis of rotation (4) of the adjustment system (1), having an adjustment device (6) for the tilting of the holding frame (3) around the axis of rotation (4) of the adjustment system (1) wherein the adjustment device (6) and the holding frame (3) are connected in a swiveling manner, the adjusting axis (7) of the adjusting device (6) running skew relative to the longitudinal axis (5) of the axis of rotation (4) and one or more light modules (2) being arranged on the holding frame (3) so that the optical axis (8) of one or more light modules (2) or a parallel projection of the optical axis (8) of the one or more light modules (2) intersecting the longitudinal axis (5) of the axis of rotation (4) runs at an angle (α) between 10° and 89° inclined towards the longitudinal axis (5) of the axis of rotation (4), **characterized in that** the axis of rotation(4) is arranged on a first side (3a) of the holding frame (3) and the adjustment device (6) is connected in a swiveling manner on a second side (3b) opposite the first side (3a) of the holding frame (3), wherein the axis of rotation (4) of the adjustment device (6) not being vertical to the vehicle direction of the vehicle can be arranged so that the optical axis of the light module runs in its normal setting parallel to the vehicle direction.

2. Lighting unit according to Claim 1, **characterized in that** the adjustment device (6) is connected to the holding frame (3) so that the adjustment axis (7) of the adjustment device (6) runs in a parallel projection, in which it intersects the longitudinal axis (5) of the axis of rotation (4), vertically to the longitudinal axis (5) of the axis of rotation (4).

3. Lighting unit according to at least one of the previous Claims 1 or 2, **characterized in that** the optical axis (8) of the one or more light modules (2) or a parallel projection of the optical axis (8) of the one or more light modules (2) intersecting the adjustment axis (7) of the adjustment device (6), runs at an angle (β) between 1° and 80°, and particularly between 5° and 50°, inclined towards the adjustment axis (7) of the adjustment direction (6).

4. Lighting unit according to at least one of the previous Claims 1 to 3, **characterized in that** the angle (α) has a value between 40° and 80°, and particularly between 50° and 70° and very particularly of 60°, and / or that the angle (β) has a value between 10° and 45°, and particularly between 20° and 40°.

5. Lighting unit according to at least one of the previous Claims 1 to 4, **characterized in that** the adjustment device (6) comprises a threaded spindle transforming a rotational movement into a translatory movement.

6. Lighting unit according to Claims 1 to 5, **characterized in that** the one or more light modules (2) comprise at least on light diode.

7. Lighting unit according to at least one of the previous Claims 1 to 6, **characterized in that** the lighting device is a headlamp, and in particular a front headlamp, of a vehicle, in particular of a passenger vehicle.

## Revendications

1. Dispositif d'éclairage pour un véhicule avec au moins un module d'éclairage (2) et avec un système de réglage (1) pour un ou plusieurs modules d'éclairage (2), présentant un cadre de maintien (3) disposé dans un boîtier du dispositif d'éclairage sur lequel sont disposés un ou plusieurs modules d'éclairage (2), le cadre de maintien (3) pivotant autour d'un axe rotatif (4) du système de réglage (1) à l'intérieur du boîtier du dispositif d'éclairage, présentant un dispositif de réglage (6) pour incliner le cadre de maintien (3) autour de l'axe rotatif (4) du système de réglage (1), le dispositif de réglage (6) et le cadre de maintien (3) étant montés de manière pivotante l'un avec l'autre, l'axe de réglage (7) du dispositif de réglage (6) s'étendant de travers par rapport à l'axe longitudinal (5) de l'axe rotatif (4) et qu'un ou plusieurs modules d'éclairage (2) étant disposés de telle sorte sur le cadre de maintien (3) que l'axe optique (8) d'un ou de plusieurs modules d'éclairage (2) ou une projection parallèle de l'axe optique (8) d'un ou de plusieurs modules d'éclairage (2) qui coupe l'axe longitudinal (5) de l'axe rotatif (4) s'étende à un angle (α) entre 10° et 89° incliné à l'axe longitudinal (5) de l'axe rotatif (4), **caractérisé en ce que** l'axe rotatif (4) est disposé sur un premier côté (3a) du cadre de maintien (3) et le dispositif de réglage (6) est articulé de manière pivotante sur un deuxième côté (3b) opposé au premier côté (3a) du cadre de maintien (3), l'axe rotatif (4) du système de réglage (6)non perpendiculaire à la direction du véhicule pouvant être disposé de telle manière que l'axe optique du module d'éclairage dans sa position normale soit parallèle à la direction du véhicule.

2. Dispositif d'éclairage selon la revendication 1, **caractérisé en ce que** le dispositif de réglage (6) est articulé de telle manière sur le cadre de maintien (3) que l'axe de réglage (7) du dispositif de réglage (6) dans une projection parallèle dans laquelle il coupe l'axe longitudinal (5) de l'axe rotatif (4) s'étende perpendiculaire à l'axe longitudinal (5) de l'axe rotatif (4).

3. Dispositif d'éclairage selon au moins l'une des revendications précédentes 1 ou 2, **caractérisé en ce que** l'axe optique (8) d'un ou de plusieurs modules d'éclairage (2) ou une projection parallèle de l'axe optique (8) d'un ou de plusieurs modules d'éclairage (2) qui coupe l'axe de réglage (7) du dispositif de réglage (6) s'étend dans un angle (β) entre 1° et 80°, surtout entre 5° et 50° incliné vers l'axe de réglage (7) du dispositif de réglage (6).

4. Dispositif d'éclairage selon au moins l'une des revendications précédentes 1 à 3, **caractérisé en ce que** l'angle (α) a une valeur entre 45° et 80°, surtout entre 50° et 70° et particulièrement de 60° et/ou l'angle (β) présente une valeur entre 10° et 45°, surtout entre 20° et 40°.

5. Dispositif d'éclairage selon au moins l'une des revendications précédentes 1 à 4, **caractérisé en ce que** le dispositif de réglage (6) présente une broche filetée qui transforme un mouvement de rotation en un mouvement de translation.

6. Dispositif d'éclairage selon les revendications 1 à 5, **caractérisé en ce qu'**un ou plusieurs modules d'éclairage (2) présentent au moins une diode électroluminescente.

7. Dispositif d'éclairage selon au moins l'une des revendications précédentes 1 à 6, **caractérise en ce que** le dispositif d'éclairage est un projecteur, surtout un projecteur avant d'un véhicule, surtout d'un véhicule automobile particulière.
